# FASCICULE DE BREVET EUROPEEN

(11) **EP 3 084 140 B1**
(45) Date de publication et mention de la délivrance du brevet: **14.03.2018**
(21) Numéro de dépôt: 14830986.7
(22) Date de dépôt: 18.12.2014
(51) Int. Cl.: F01D 9/06, F16L 3/10, F16L 3/233

(54) **BRAS DE GUIDAGE D'ÉLÉMENTS DE FORME ALLONGÉE, EN PARTICULIER POUR UNE TURBOMACHINE**
FÜHRUNGSARM FÜR GEGENSTÄNDE MIT LÄNGLICHER FORM, INSBESONDERE FÜR EINE TURBOMASCHINE
GUIDE ARM FOR ELEMENTS HAVING AN ELONGATED SHAPE, IN PARTICULAR FOR A TURBOMACHINE

(30) Priorité: 20.12.2013 FR 1363343
(43) Date de publication de la demande: 26.10.2016
(73) Titulaire: Snecma, 75015 Paris (FR)
(72) Inventeur: GAUDRY, Florian, F-77550 Moissy Cramayel Cedex (FR); BELJAMBE, Ceddric, F-77550 Moissy Cramayel Cedex (FR)
(74) Mandataire: Pichat, Thierry
(86) Numéro de dépôt international: PCT/FR2014/053439
(87) Numéro de publication internationale: WO 2015/092308

(56) Documents cités:
- FR-A1- 2 875 855

## Description

La présente invention concerne un bras de guidage d'éléments de forme allongée, en particulier adapté au passage d'éléments de forme allongée au travers d'une veine de turbomachine telle qu'un turboréacteur ou un turbopropulseur.

Une telle turbomachine comprend généralement une veine annulaire de circulation d'air d'amont en aval de la turbomachine, le long et autour de son axe à travers des étages successifs de compression, de combustion et de turbine, cette veine étant délimitée intérieurement et extérieurement par deux viroles annulaires respectives, l'air étant utilisé pour propulser la turbomachine. En plus des éléments mécaniques servant à engendrer la propulsion, la turbomachine comprend des équipements assurant son bon fonctionnement, tels que des capteurs, des calculateurs, des systèmes de refroidissement ou de lubrification. Ces équipements communiquent entre eux ou avec des équipements externes à la turbomachine par des éléments de forme allongée, qui correspondent généralement à des harnais électriques, c'est-à-dire des ensembles d'un ou de plusieurs câbles, ou à des canalisations. En particulier, certains de ces éléments de forme allongée doivent relier des équipements agencés à l'intérieur de la veine à d'autres équipements agencés à l'extérieur de la veine. Les éléments de forme allongée doivent donc traverser la veine afin de relier ces différents équipements. Le flux d'air de la veine pouvant générer de fortes contraintes et perturbations sur ces éléments de forme allongée, il est nécessaire de les maintenir et de les guider convenablement à travers la veine.

Il est connu d'utiliser des bras de guidage, montés radialement à travers la veine, comme guides pour des éléments de forme allongée. Un tel bras de guidage est présenté dans le document FR 2 875 855 A1. Ces bras peuvent être uniquement dédiés au passage d'éléments de forme allongée, mais peuvent aussi être utilisés comme éléments structurels de la turbomachine, ou comme éléments de guidage du flux d'air. Par ailleurs, la demande de brevet française FR 2 906 336 propose des bagues de mise en place et de maintien de harnais, présentant un profil rectangulaire apte à entourer et à réaliser un maintien des harnais sur une courte longueur. Ces bagues comprennent en outre des alésages de fixation sur une paroi telle que celle d'un des bras précités par exemple.

Toutefois, l'homme du métier n'utilise pas ces supports pour maintenir les éléments de forme allongée le long des bras de guidage, car ces supports, ainsi que les éléments de forme allongée, seraient dans ce cas soumis aux flux traversant la veine. Il en résulte que ces éléments subiraient des contraintes en fonctionnement, ce qui provoquerait leur usure rapide et de forts risques de rupture. De plus, ces supports seraient saillants sur les bras de guidage où ils sont montés, et les critères aérodynamiques d'écoulement de l'air ne seraient donc pas bien respectés, ce qui engendrerait des perturbations du flux et une perte de performances de la turbomachine.

De manière plus avantageuse, il est également connu, comme l'illustre la demande de brevet FR1354716 de la demanderesse, de monter des moyens de maintien des éléments de forme allongée à l'intérieur des bras de guidage dans des cavités les parcourant radialement et débouchant à leurs extrémités radiales. Dans ce cas, pour permettre le montage de ces moyens à l'intérieur du bras de guidage, il est connu d'y ménager une trappe d'accès à la cavité. Une telle trappe d'accès perturbe l'intégration aérodynamique du bras de guidage dans la veine, car elle interrompt la continuité de la surface du bras de guidage. Pour la même raison, cette trappe réduit la rigidité du bras de guidage et le fragilise. Le montage de la trappe, qui s'effectue par vissage, impose également d'augmenter en partie l'épaisseur du bras de guidage pour permettre le passage et le maintien des vis. Cela augmente de manière indésirable la masse globale de la turbomachine. Enfin, le montage décrit dans la demande citée implique un verrouillage des moyens de maintien en aveugle, lors de la fermeture de la trappe, ce qui implique une incertitude quant à la réussite du montage des éléments de forme allongée dans ces moyens de maintien.

L'invention a notamment pour but d'apporter une solution simple, efficace et économique à ces problèmes.

A cet effet, elle propose un bras de guidage d'au moins un élément de forme allongée, chaque élément de forme allongée correspondant par exemple à un harnais électrique ou à une canalisation, ledit bras s'étendant selon une direction sensiblement longitudinale entre deux extrémités, comprenant une cavité interne débouchant à l'extérieur du bras à chacune de ses extrémités, et étant apte à loger au moins un élément de forme allongée s'étendant sensiblement longitudinalement dans la cavité, caractérisé en ce que ledit bras est formé de deux parties s'étendant sensiblement longitudinalement et en vis-à-vis l'une de l'autre,
- l'une des deux parties étant un châssis comprenant une poutre sensiblement longitudinale reliée à des moyens de maintien des éléments de forme allongée situés à l'extérieur et le long de la poutre, et
- l'autre des deux parties étant un capot comprenant des parois sensiblement longitudinales qui recouvrent les moyens de maintien du châssis, et qui sont engagées avec la poutre, de manière à former la cavité interne où s'étendent les éléments de forme allongée,
des moyens d'amortissement étant agencés précontraints entre les moyens de maintien des éléments de forme allongée, et les parois longitudinales, de manière à réduire et amortir les mouvements des moyens de maintien dans la cavité.

La poutre est par exemple un bras structurel de carter intermédiaire d'une turbomachine.

L'invention présente un bras de guidage comprenant une cavité interne dans laquelle des éléments de forme allongée sont protégés et guidés. Ce bras de guidage peut avantageusement être monté au travers d'une veine de turbomachine. Contrairement à l'art antérieur, ce bras ne nécessite pas la mise en place d'une trappe d'ouverture et d'accès à la cavité. Ainsi, la mise en place des éléments de forme allongée s'effectue facilement dans un premier temps dans les moyens de maintien reliés à la poutre, et la cavité protectrice est ensuite mise en forme par engagement du capot avec la poutre. Cela permet de conserver un bras de guidage longitudinalement continu et ininterrompu qui répond mieux aux exigences de rigidité et d'aérodynamisme d'une turbomachine. De plus, sans présence de trappe d'accès, il est possible de maintenir toutes les parois du bras de guidage à une épaisseur optimale sans contrainte de dimensionnement particulière, ce qui permet de gagner en masse par rapport à l'art antérieur. L'invention laisse l'opportunité d'utiliser comme poutre un bras structurel de la turbomachine, tel qu'un bras de carter intermédiaire. Le bras de guidage de l'invention peut donc être intégré dans une turbomachine de manière optimale. Les moyens d'amortissement sont particulièrement adaptés lorsque le bras de guidage est monté dans une turbomachine. En effet, les mouvements rotatifs environnants induisent des vibrations qui peuvent se propager jusqu'au moyens de maintien par l'intermédiaire de la poutre. Grâce à l'invention précitée, ces vibrations sont amorties et ne provoquent donc pas l'usure des moyens de maintien et des éléments de forme allongée qui y sont agencés. Par ailleurs, ces moyens d'amortissement assurent un centrage réussi des moyens de maintien des éléments de forme allongée dans la cavité, sans qu'il soit nécessaire de former un accès à la cavité depuis l'extérieur pour une intervention manuelle d'ajustement par un utilisateur.

Selon un premier mode possible de l'invention, les moyens d'amortissement comprennent des patins en élastomère fixés aux parois longitudinales du capot. Ces patins peuvent facultativement être revêtus d'un matériau résistant aux frottements tel que le polytétrafluoroéthylène (PTFE), c'est-à-dire le matériau connu sous la marque déposée Téflon®, tissé au voisinage du contact avec les moyens de maintien du châssis. Le matériau résistant aux frottements permet d'augmenter la durée de vie des patins.

Selon un deuxième mode possible de l'invention, les moyens d'amortissement comprennent des plaques métalliques ondulées, fixées aux parois longitudinales du capot et dont les crêtes des ondulations sont en appui d'un côté contre les parois longitudinales du capot et d'un autre côté contre les moyens de maintien du châssis. Afin de gagner en souplesse, les plaques métalliques peuvent comprendre des portions évidées. Les plaques métalliques ondulées peuvent présenter une raideur à l'écrasement typiquement comprise entre 0,1 tonne/mètre et 10 tonnes/mètre.

Selon une caractéristique de l'invention, les moyens d'amortissement sont fixés aux parois longitudinales du capot au moyen de rivets aveugles. Cela autorise le montage des moyens d'amortissement même lorsque l'espace disponible d'un côté de la paroi ne permet pas le passage d'un outil.

Préférentiellement, les rivets aveugles sont engagés par l'extérieur du capot et possèdent des têtes fraisées de manière à affleurer la surface externe du capot. Ainsi, les rivets aveugles ne peuvent pas provoquer de perturbations aérodynamiques lorsqu'un flux s'écoule autour du bras de guidage.

Avantageusement, les moyens de maintien du châssis comprennent au moins un organe de passage des éléments de forme allongée comportant des orifices de passage des éléments de forme allongée orientés sensiblement longitudinalement, et qui est maintenu serré autour des éléments de forme allongée par un collier entourant ledit organe de passage des éléments de forme allongée, ledit collier étant fixé à une oreille s'étendant de la poutre.

Selon une caractéristique de l'invention, plusieurs oreilles sont sensiblement alignées le long de la poutre, et sont fixées chacune à un collier serrant un organe de passage des éléments de forme allongée, afin de guider les éléments de forme allongée le long du bras de guidage.

L'invention concerne également un ensemble d'un bras de guidage tel que décrit précédemment, et d'au moins un élément de forme allongée, caractérisé en ce que le bras de guidage possède un profil aérodynamique pour un écoulement d'un fluide d'amont en aval du bras de guidage, sensiblement perpendiculairement à la direction longitudinale, l'amont du bras de guidage étant formé par le châssis dont les oreilles s'étendent longitudinalement et vers l'aval, depuis l'aval de la poutre, les éléments de forme allongée étant alignés d'amont en aval dans les organes de passage agencés en aval des oreilles, et l'aval du bras de guidage étant formé par le capot dont les parois longitudinales s'étendent d'amont en aval de part et d'autre des organes de passage des éléments de forme allongée, et sont reliées à la poutre de part et d'autre des oreilles, de manière à ce que le bras de guidage présente deux surfaces extérieures d'aspects lisses et réguliers, sensiblement parallèles l'une à l'autre, et se rejoignant en deux bords amont et aval du bras de guidage.

L'invention concerne aussi une turbomachine, telle qu'un turboréacteur ou un turbopropulseur, caractérisée en ce qu'elle comprend un bras de guidage tel que décrit précédemment.

Ce bras de guidage peut être agencée à travers une veine annulaire de circulation de fluide de la turbomachine, une des extrémités du bras de guidage étant reliée à une virole annulaire interne de la veine, et l'autre extrémité du bras de guidage étant reliée à une virole annulaire externe de la veine, de manière à guider au moins un élément de forme allongée entre radialement l'intérieur et l'extérieur de la veine, le châssis étant agencée en amont du capot.

L'invention sera mieux comprise et d'autres détails, caractéristiques et avantages de celle-ci apparaîtront plus clairement à la lecture de la description qui suit faite à titre d'exemple non limitatif et en référence aux dessins annexés, dans lesquels :
- la figure 1 est une vue en perspective d'un bras de guidage d'éléments de forme allongée selon l'art antérieur
- la figure 2 est une vue partielle en perspective d'une veine de turbomachine où est montée un bras de guidage selon l'invention, avec arrachage du capot,
- la figure 3 est une vue en perspective d'une section de châssis selon l'invention, issue de la figure 2,
- la figure 4 est une vue en coupe transversale du bras de guidage selon un premier mode de réalisation de l'invention, dans un plan perpendiculaire à la direction longitudinale.
- la figure 5 est une vue partielle en perspective du bras de guidage selon un second mode de réalisation de l'invention,
- la figure 6 est une vue en perspective d'une tôle métallique d'amortissement, destinée à être intégrée au bras de guidage selon le second mode de réalisation de l'invention.

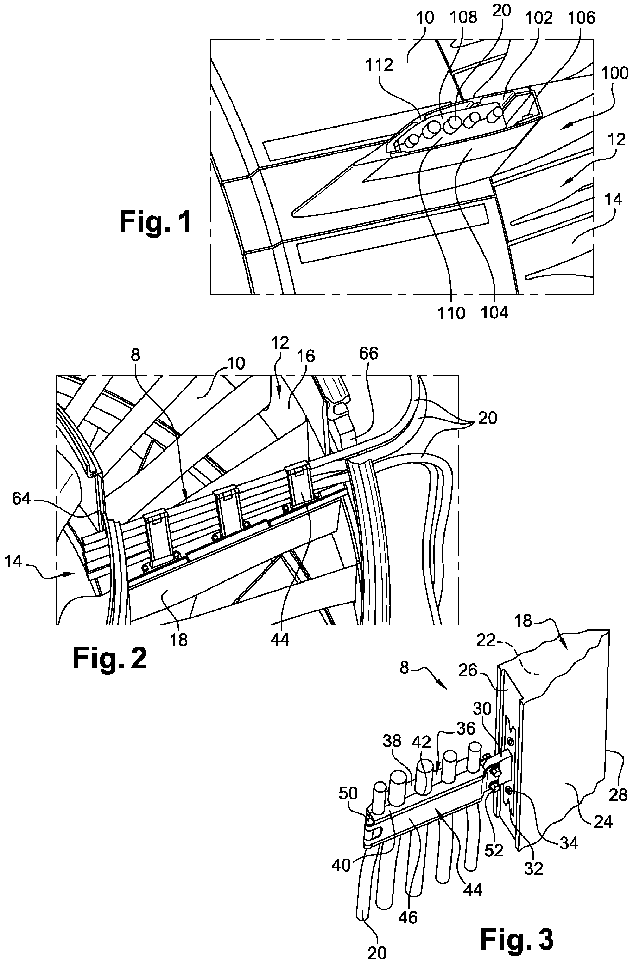

On se réfère d'abord à la figure 1 qui représente une veine 10 de turbomachine ou est monté un bras de guidage selon l'art antérieur. En particulier, la veine est représentée au niveau de l'étage axial de la turbomachine correspondant au carter intermédiaire 12. Le carter intermédiaire 12 est une roue agencée autour de l'axe (non représenté) de la turbomachine, en continuité axiale avec les autres éléments annulaires de la turbomachine. Le carter intermédiaire 12 présente une structure adaptée et une rigidité suffisante pour consister en une pièce de maintien structurel de la turbomachine. Il comprend un moyeu 14 central formant la limite interne de la veine 10, une virole externe (non représentée) formant la limite externe de la veine 10, et des bras radiaux 100 reliant le moyeu à la virole. Ces bras 100 sont généralement obtenus de fonderie afin de leur conférer une rigidité suffisante. Ces bras 100 perturbent de plus inévitablement l'écoulement du flux d'air à travers la veine 10, et sont conçus par conséquent avec un profil aérodynamique.

Afin de relier différents équipements situés à l'intérieur de la veine 10, tels que des capteurs, des calculateurs, des moyens de commandes, des systèmes de combustion, de lubrification ou de refroidissement, avec l'environnement externe de la turbomachine, il est nécessaire de faire circuler des éléments de forme allongée 20, c'est-à-dire par exemple soit des harnais, correspondant à des ensembles constitués d'un ou de plusieurs câbles, par exemple électriques, soit des canalisations, pour la circulation d'un fluide tel que de l'air, du fuel ou de l'huile, radialement à travers la veine 10 de turbomachine.

Il est connu de l'art antérieur de former les bras 100 de manière à ce qu'ils comprennent chacun une cavité 102 de passage des éléments de forme allongée 20 s'étendant radialement à l'intérieur du bras 100. Afin d'accéder à la cavité pour permettre le montage des éléments de forme allongée à l'intérieur du bras, l'art antérieur propose de ménager une trappe d'accès 104 à la cavité 102 dans le bras 100. Une telle trappe d'accès 104 perturbe l'intégration aérodynamique du bras 100 dans la veine 10, car elle interrompt la continuité de la surface du bras. Pour la même raison, cette trappe 104 réduit la rigidité du bras de guidage et le fragilise. Le montage de la trappe, qui s'effectue à l'aide de vis 106 intégrées au bras 100, impose également d'augmenter en partie l'épaisseur du bras pour permettre le passage et le maintien des vis 106. Cela augmente de manière indésirable la masse globale de la turbomachine. Afin de maintenir les éléments de forme allongée 20 dans la cavité 102, deux blocs 108, 110 sont agencés dans la cavité, l'un 108 étant fixé à une paroi 112 du bras faisant face à la trappe d'accès 104, et l'autre 110 étant fixé à la trappe 104. Lorsque la trappe est fermée, les deux blocs 108, 110 pincent les éléments de forme allongée 20 afin de les maintenir dans la cavité 102. Par conséquent, le montage de l'art antérieur implique une mise en place des éléments de forme allongée entre les blocs en aveugle, avec un doute subsistant quant à leur positionnement correct, lors de la fermeture de la trappe.

L'invention proposée, qui décrit un bras de guidage d'éléments de forme allongée 20, peut aisément être adaptée à un bras de carter intermédiaire. Ainsi, les figures 2 et 3 représentent l'invention adaptée à un bras de carter intermédiaire dans une veine de turbomachine, telle qu'un turboréacteur ou un turbopropulseur.

De manière plus détaillée, le bras de carter intermédiaire concerné comprend généralement une poutre 18, pleine, ou creuse pour diminuer la masse de l'ensemble, obtenue de fonderie, s'étendant radialement entre le moyeu 14 formant la limite interne de la veine 10 à l'étage défini par le carter intermédiaire 12, et la virole externe 16 du carter intermédiaire formant la limite externe de la veine 10 à ce même étage. Cette poutre comprend trois faces 22, 24, 26 s'étendant radialement, dont deux faces 22, 24 se rejoignent en amont selon un bord d'attaque 28, et s'étendent vers l'aval en s'écartant l'une de l'autre progressivement. Ces deux faces amont sont conçues pour assurer une déviation sans perturbation du flux d'air parcourant la veine 10 d'amont en aval de part et d'autre du bras. Les extrémités aval de ces deux faces amont 22, 24 sont reliées par une troisième face aval 26, sensiblement perpendiculaire à l'axe de la turbomachine.

Des oreilles 30 sont solidaires de la face aval 26 de la poutre et alignées radialement sur son long, chaque oreille 30 s'étendant radialement et vers l'aval depuis la face aval 26 de la poutre. Plus particulièrement, chaque oreille 30 est formée solidairement avec une embase plane 32 s'étendant sur une faible distance radialement à l'extérieur et à l'intérieur de l'oreille 30, cette embase comprenant des trous 34 de passage de vis de fixation sur la face aval 26 de la poutre.

Les différents éléments de forme allongée 20 traversant radialement la veine 10 sont logés dans des organes de passage 36 des éléments de forme allongée, de manière à être alignés axialement les uns par rapport aux autres. Chaque organe de passage 36 comprend un couple de blocs 38, 40 par exemple en élastomère ou en thermoplastique, chaque bloc 38, 40 comprenant sur une surface une série de rainures 42 en forme de demi-cylindres. Par coopération de forme entre les deux blocs 38, 40, sensiblement symétriques, et lorsque les deux blocs 38, 40 en vis-à-vis circonférentiel sont serrés l'un avec l'autre, les deux séries de rainures 42 forment une seule série d'orifices cylindriques orientés sensiblement radialement, alignés axialement et maintenant fermement serrés les éléments de forme allongée 20.

Un collier 44, par exemple métallique, maintient serré chaque organe de passage 36 des éléments de forme allongée 20 et est fixé à une oreille 30 correspondante. Plus particulièrement, chaque collier 44 est formé de deux bandes rigides 46, 48 s'étendant axialement et de part et d'autre d'un organe de passage 36 des éléments de forme allongée, tout en épousant la forme de l'organe de passage 36. Ces deux bandes rigides 46, 48 son reliées à leurs extrémités aval autour d'une tige 50 radiale de manière à permettre une rotation relative des deux bandes 46, 48 autour de l'axe de cette tige 50. Les extrémités amont des deux bandes 46, 48 comprennent deux trous de passage de vis 52 coopérant respectivement avec deux trous traversant latéraux de l'oreille, pour une fixation relative boulonnée. Ainsi, lorsque l'oreille 30 et les extrémités amont des bandes 46, 48 sont serrées circonférentiellement les unes par rapports aux autres, les deux blocs 38, 40 composant chaque organe de passage 36 des éléments de forme allongée sont fermement maintenus l'un contre l'autre par les bandes 46, 48, et assurent le maintien des éléments de forme allongée 20 dans les orifices cylindriques.

L'ensemble décrit ci-dessus et comprenant la poutre 18, les oreilles 30, l'organe de passage 36 et le collier 44, constitue donc le châssis 8 selon l'invention.

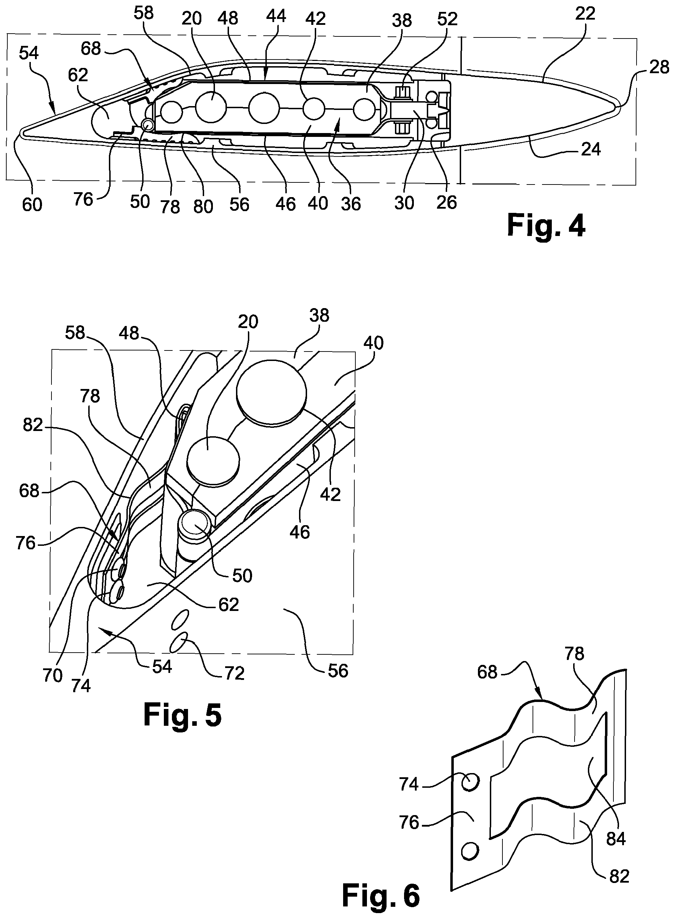

Il est maintenant fait référence aux figures 4 et 5. Afin de protéger les éléments de forme allongée 20 et les organes de passage 36 du flux d'air parcourant la veine 10, l'invention propose d'agencer un capot 54 en appui sur la poutre 18 depuis l'aval. Ce capot 54 s'étend radialement entre les limites interne et externe de la veine 10, en vis-à-vis axial de la poutre 18 du carter intermédiaire 12. Il comprend deux parois radiales 56, 58 reliées à l'aval en un bord de fuite 60 et s'étendant vers l'amont et de part et d'autre des organes de passage 36 et des éléments de forme allongée 20, avec un espacement réciproque maximum typiquement compris entre 20 et 40 mm. Les extrémités amont des deux parois radiales 56, 58 du capot 54 s'appuient sur la face aval 26 de la poutre 18 du carter intermédiaire 12 et dans en alignement respectif avec les deux faces 22, 24 amont de la poutre 18. Ainsi agencée, le bras de guidage comprenant la poutre 18 et le capot 54 forme une cavité interne 62 s'étendant radialement, et délimitée en amont par la face aval 26 de la poutre 18, et en aval et circonférentiellement par les parois radiales 56, 58 du capot. Les éléments de forme allongée 20 sont guidés radialement dans cette cavité 62 qui s'étend à travers la veine 10, et traversent des ouvertures 64, 66 formées dans les limites annulaires internes et externes de la veine 10 et alignées radialement avec la cavité 62. De plus, l'alignement entre les parois radiales 56, 58 du capot et les faces amont 22, 24 de la poutre assurent un profil aérodynamique optimal du bras de guidage formé s'étendant dans la veine.

Dans l'environnement représenté sur les figures, le capot 54 correspond à un bras de Kit Engine. Le Kit Engine est une roue agencée axialement en continuité avec le carter intermédiaire, de manière à compléter structurellement ce dernier. Il permet donc dans le contexte de l'invention de former la partie aval du bras de guidage correspondant au capot 54.

En fonctionnement, les éléments tournants de la turbomachine engendrent des vibrations. Ces vibrations se propagent par la poutre 18 du carter intermédiaire aux organes de passage 36 des éléments de forme allongée, d'autant plus que ces derniers possèdent leurs extrémités aval en porte à faux par rapport à leur attache amont aux oreilles 30. Ainsi, en fonctionnement, des risques sont présents de frottement et de percussions entre les organes de passage 36 des éléments de forme allongée et les parois radiales 56, 58 du capot, typiquement espacés les uns des autres d'une distance comprise entre 3 à 6 mm, ce qui implique un risque évident d'usure pouvant engendrer une rupture des moyens de maintien. Afin de palier à ce problème, et en référence aux figures 4 à 6, l'invention propose d'agencer des moyens d'amortissement 68 précontraints à l'intérieur de la cavité 62 entre les parois radiales 56, 58 du capot et les organes de passage 36 des éléments de forme allongée. Préférentiellement et comme représenté, les extrémités aval des organes de passage 36 des éléments de forme allongée, serrées par les colliers 44, sont chacune amorties circonférentiellement de part et d'autre par respectivement deux éléments d'amortissement 68 fixés respectivement aux parois radiales 56, 58. Lors du montage, le capot 54 est amenée axialement vers l'amont contre la poutre 18. Les moyens d'amortissement 68 fixés auparavant sur les parois radiales 56, 58 servent alors également de moyens de centrage et de précontrainte des extrémités aval des organes de passage 36 des éléments de forme allongée dans la cavité 62 formée. Il n'est donc pas nécessaire de réaliser une étape supplémentaire d'ajustement des éléments de forme allongée 20 dans les cavités 62.

L'espace disponible entre les parois radiales 56, 58 du capot peut ne pas permettre le passage d'outils de montage. L'invention propose donc de fixer les moyens d'amortissement 68 à l'aide de rivets aveugles 70 insérés à travers des orifices 72 des parois radiales 56, 58 alignés avec des orifices 74 des moyens d'amortissement. Les têtes des rivets aveugles 70 sont fraisées de manière à ce qu'elles affleurent les surfaces des parois 56, 58, afin de ne pas perturber l'écoulement du flux d'air dans la veine 10.

Dans la figure 4, les moyens d'amortissement 68 sont des patins en matière souple telle qu'en élastomère, plus particulièrement en silicone. Ces patins, appuyés contre les parois radiales du capot, comprennent chacun une partie aval 76 traversées par les rivets aveugles 70 de fixation, et une partie amont 78 intercalée entre une des parois 56, 58 et le collier 44 d'un organe de passage 36 des éléments de forme allongée. Afin de prévenir l'usure de ces patins, on revêt les patins d'un matériau résistant aux frottements tel que du tissu en polytétrafluoroéthylène (PTFE), c'est-à-dire le matériau connu sous la marque déposée Téflon® 80, au niveau des contacts avec le collier 44 entourant l'organe de passage 36 des éléments de forme allongée.

Dans un autre choix de réalisation représenté en figures 5 et 6, les moyens d'amortissement 68 sont formés de tôles métalliques ondulées et longeant les parois radiales 56, 58 respectives du capot. Ces tôles métalliques sont de forme rectangulaire et présentent des crêtes 82 rectilignes orientées radialement dans la cavité. La partie aval 76 de chaque tôle est fixée à une paroi radiale 56, 58, tandis que la partie amont 78 de la tôle est en appui contre ladite paroi par certaines crêtes 82, et en appui contre un collier 44 entourant un organe de passage 36 des éléments de forme allongée par les crêtes 82 opposées. Les ondulations de la tôle s'écrasent en fonctionnement afin d'amortir les vibrations. Typiquement, la raideur de la tôle à l'appui est comprise entre 0,1 tonne/mètre et 10 tonnes/mètre. Afin de gagner en souplesse et en masse sur la tôle, l'invention propose d'évider cette dernière par exemple selon un évidement rectangulaire 84 centré sur la tôle, de manière à former au final un cadre métallique présentant des ondulations.

Il est enfin important de noter que la description effectuée ci-dessus, représentant le bras de guidage objet de l'invention monté dans une veine de turbomachine selon une orientation particulière par rapport à l'axe, c'est-à-dire avec le châssis en amont du capot, peut aisément être adaptée à un montage dans la veine axialement dans le sens contraire, c'est-à-dire avec le châssis en aval du capot. Le profil aérodynamique du bras de guidage pourrait dans ce cas être facilement modifié pour respecter les contraintes d'intégration dans la veine.

Par ailleurs, il ressort à l'évidence de l'exposé de l'invention et de la description effectuée ci-dessus, que le bras de guidage selon l'invention n'est nullement nécessairement limité à la destination de l'environnement d'une turbomachine et d'une de ses veines d'écoulement, mais peut fonctionnellement s'intégrer à toutes sortes d'environnements, tels qu'un espace ouvert, une veine circulaire classique, un espace séparant deux parois parallèles, etc.

## Revendications

1. Bras de guidage d'au moins un élément de forme allongée (20), chaque élément de forme allongée correspondant par exemple à un harnais électrique ou à une canalisation, ledit bras s'étendant selon une direction sensiblement longitudinale entre deux extrémités, comprenant une cavité interne (62) débouchant à l'extérieur du bras à chacune de ses extrémités, et étant apte à loger au moins un élément de forme allongée s'étendant sensiblement longitudinalement dans la cavité, ledit bras étant formé de deux parties s'étendant sensiblement longitudinalement et en vis-à-vis l'une de l'autre,
- l'une des deux parties étant un châssis (8) comprenant une poutre (18) sensiblement longitudinale reliée à des moyens de maintien (30, 36, 44) des éléments de forme allongée situés à l'extérieur et le long de la poutre, et
- l'autre des deux parties étant un capot (54) comprenant des parois (56, 58) sensiblement longitudinales qui recouvrent les moyens de maintien du châssis, et qui sont engagées avec la poutre, de manière à former la cavité interne où s'étendent les éléments de forme allongée,
**caractérisé en ce que** des moyens d'amortissement (68) sont agencés précontraints entre les moyens de maintien (30, 36, 44) des éléments de forme allongée (20) et les parois longitudinales (56, 58), de manière à réduire et amortir les mouvements des moyens de maintien dans la cavité (62).

2. Bras de guidage selon la revendication 1, **caractérisé en ce que** les moyens d'amortissement (68) comprennent des patins en élastomère fixés aux parois longitudinales (56, 58) du capot (54), et revêtus d'un matériau (80) résistant aux frottements tel que le polytétrafluoroéthylène au voisinage du contact avec les moyens de maintien (30, 36, 44) du châssis (8).

3. Bras de guidage selon la revendication 1, **caractérisé en ce que** les moyens d'amortissement (68) comprennent des plaques métalliques ondulées, fixées aux parois longitudinales (56, 58) du capot (54) et dont les crêtes (82) des ondulations sont en appui d'un côté contre les parois longitudinales du capot et d'un autre côté contre les moyens de maintien (30, 36, 44) du châssis (8).

4. Bras de guidage selon l'une des revendications 1 à 3, **caractérisé en ce que** les moyens d'amortissement (68) sont fixés aux parois longitudinales (56, 58) du capot (54) au moyen de rivets aveugles (70).

5. Bras de guidage selon l'une des revendications précédentes, **caractérisé en ce que** les moyens de maintien (30, 36, 44) du châssis (8) comprennent au moins un organe de passage (36) des éléments de forme allongée (20) comportant des orifices de passage des éléments de forme allongée orientés sensiblement longitudinalement, et qui est maintenu serré autour des éléments de forme allongée par un collier (44) entourant ledit organe de passage des éléments de forme allongée, ledit collier étant fixé à une oreille (30) s'étendant de la poutre (18).

6. Bras de guidage selon la revendication 5, **caractérisé en ce que** plusieurs oreilles (30) sont sensiblement alignées le long de la poutre (18), et sont fixées chacune à un collier (44) serrant un organe de passage (36) des éléments de forme allongée (20), afin de guider les éléments de forme allongée le long du bras de guidage.

7. Ensemble d'un bras de guidage selon l'une des revendications 5 ou 6, et d'au moins un élément de forme allongée (20), **caractérisé en ce que** le bras de guidage possède un profil aérodynamique pour un écoulement d'un fluide d'amont en aval du bras de guidage, sensiblement perpendiculairement à la direction longitudinale, l'amont du bras de guidage étant formé par le châssis (8) dont les oreilles (30) s'étendent longitudinalement et vers l'aval, depuis l'aval de la poutre (18), les éléments de forme allongée étant alignés d'amont en aval dans les organes de passage (36) agencés en aval des oreilles, et l'aval du bras de guidage étant formé par le capot (54) dont les parois longitudinales (56, 58) s'étendent d'amont en aval de part et d'autre des organes de passage des éléments de forme allongée, et sont reliées à la poutre de part et d'autre des oreilles, de manière à ce que le bras de guidage présente deux surfaces extérieures d'aspects lisses et réguliers, sensiblement parallèles l'une à l'autre, et se rejoignant en deux bords amont (28) et aval (60) du bras de guidage.

8. Turbomachine, telle qu'un turboréacteur ou un turbopropulseur, **caractérisée en ce qu'**elle comprend un bras de guidage selon l'une des revendications 1 à 6.

9. Turbomachine, telle qu'un turboréacteur ou un turbopropulseur, selon la revendication 8, **caractérisée en ce que** le bras de guidage est agencée à travers une veine (10) annulaire de circulation de fluide de la turbomachine, une des extrémités du bras de guidage étant reliée à une virole annulaire interne de la veine, et l'autre extrémité du bras de guidage étant reliée à une virole annulaire externe de la veine, de manière à guider au moins un élément de forme allongée (20) entre radialement l'intérieur et l'extérieur de la veine, le châssis (8) étant agencée en amont du capot (54).

## Patentansprüche

1. Führungsarm zum Führen von zumindest einem Element langgestreckter Form (20), wobei jedes Element langgestreckter Form beispielsweise einem elektrischen Kabelbaum oder einer Rohrleitung entspricht, wobei sich der Arm in einer im Wesentlichen longitudinalen Richtung zwischen zwei Enden erstreckt, einen Innenhohlraum (62) aufweist, der außerhalb des Arms an jedem seiner Enden ausmündet, und dazu geeignet ist, zumindest ein Element langgestreckter Form aufzunehmen, das sich im Wesentlichen longitudinal in dem Hohlraum erstreckt, wobei der Arm aus zwei Teilen gebildet ist, die sich im Wesentlichen longitudinal und einander gegenüberliegend erstrecken,
- wobei eines der beiden Teile ein Rahmen (8) mit einem im Wesentlichen longitudinal verlaufenden Balken (18) ist, der mit Haltemitteln (30, 36, 44) zum Halten der Elemente langgestreckter Form verbunden ist, die außerhalb entlang des Balkens liegen,
und
- wobei das andere der beiden Teile eine Haube (54) ist, die im Wesentlichen longitudinal verlaufende Wände (56, 58) enthält, welche die Haltemittel des Rahmens überdecken und in Eingriff mit dem Balken sind, so dass sie den Innenhohlraum bilden, wo die Elemente langgestreckter Form verlaufen,
**dadurch gekennzeichnet, dass** Dämpfungsmittel (68) zwischen den Haltemitteln (30, 36, 44) der Elemente langgestreckter Form (20) und den longitudinal verlaufenden Wänden (56, 58) vorgespannt angeordnet sind, so dass sie die Bewegungen der Haltemittel in dem Hohlraum (62) vermindern und dämpfen.

2. Führungsarm nach Anspruch 1, **dadurch gekennzeichnet, dass** die Dämpfungsmittel (68) Schuhe aus Elastomer enthalten, die an den longitudinal verlaufenden Wänden (56, 58) der Haube (54) befestigt und mit einem abriebfesten Material (80), wie etwa Polytetrafluorethylen, beschichtet sind, und zwar in der Nähe des Kontakts mit den Haltemitteln (30, 36, 44) des Rahmens (8).

3. Führungsarm nach Anspruch 1, **dadurch gekennzeichnet, dass** die Dämpfungsmittel (68) gewellte Metallplatten enthalten, die an den longitudinal verlaufenden Wänden (56, 58) der Haube (54) befestigt sind und deren Wellenberge (82) sich auf einer Seite an den longitudinal verlaufenden Wänden der Haube abstützen und auf einer anderen Seite an den Haltemitteln (30, 36, 44) des Rahmens (8) abstützen.

4. Führungsarm nach einem der Ansprüche 1 bis 3, **dadurch gekennzeichnet, dass** die Dämpfungsmittel (68) an den longitudinal verlaufenden Wänden (56, 58) der Haube (54) mittels Blindnieten (70) befestigt sind.

5. Führungsarm nach einem der vorangehenden Ansprüche, **dadurch gekennzeichnet, dass** die Haltemittel (30, 36, 44) des Rahmens (8) zumindest ein Durchtrittsorgan (36) für die Elemente langgestreckter Form (20) aufweisen, das Durchtrittsöffnungen für die Elemente langgestreckter Form aufweist, die im Wesentlichen longitudinal ausgerichtet sind, und das um die Elemente langgestreckter Form herum von einer Schelle (44) gespannt gehalten wird, die das Durchtrittsorgan für die Elemente langgestreckter Form umgibt, wobei die Schelle an einer sich von dem Balken (18) weg erstreckenden Lasche (30) befestigt ist.

6. Führungsarm nach Anspruch 5, **dadurch gekennzeichnet, dass** mehrere Laschen (30) im Wesentlichen entlang des Balkens (18) ausgerichtet sind und jeweils ein einer Schelle (44) befestigt sind, welche ein Durchtrittsorgan (36) für die Elemente langgestreckter Form (20) verspannt, um die Elemente langgestreckter Form entlang des Führungsarms zu führen.

7. Anordnung eines Führungsarms nach einem der Ansprüche 5 oder 6 und zumindest eines Elements langgestreckter Form (20), **dadurch gekennzeichnet, dass** der Führungsarm ein aerodynamisches Profil für ein Ablaufen eines Fluids in Richtung vom vorderen zum hinteren Bereich des Führungsarms im Wesentlichen senkrecht zur longitudinalen Richtung besitzt, wobei der vordere Bereich des Führungsarms aus dem Rahmen (8) gebildet ist, dessen Laschen (30) sich longitudinal und nach hinten erstrecken, ausgehend von dem hinteren Bereich des Balkens (18), wobei die Elemente langgestreckter Form von vorn nach hinten in den Durchtrittsorganen (36) ausgerichtet sind, die den Laschen nachgelagert sind, und der vordere Bereich des Führungsarms aus der Haube (54) gebildet ist, deren longitudinal verlaufende Wände (56, 58) sich von vorn nach hinten beiderseits der Durchtrittsorgane der Elemente langgestreckter Form erstrecken und mit dem Balken beiderseits der Laschen verbunden sind, so dass der Führungsarm zwei glatt und gleichmäßig aussehende Außenflächen aufweist, die im Wesentlichen parallel zueinander verlaufen und an zwei Rändern, einem vorderen (28) und einem hinteren (60), des Führungsarms aufeinandertreffen.

8. Turbotriebwerk, wie etwa Turbostrahltriebwerk oder Turboprop-Triebwerk, **dadurch gekennzeichnet, dass** es einen Führungsarm nach einem der Ansprüche 1 bis 6 enthält.

9. Turbotriebwerk, wie etwa Turbostrahltriebwerk oder Turboprop-Triebwerk, nach Anspruch 8, **dadurch gekennzeichnet, dass** der Führungsarm durch einen ringförmigen Fluidzirkulationskanal (10) des Turbotriebwerks hindurch angeordnet ist, wobei eines der Enden des Führungsarms mit einem Innenmantelring des Kanals verbunden ist und das andere Ende des Führungsarms mit einem Außenmantelring des Kanals verbunden ist, so dass zumindest ein Element langgestreckter Form (20) radial zwischen dem Innenbereich und dem Außenbereich des Kanals geführt ist, wobei der Rahmen (8) der Haube (54) vorgelagert ist.

## Claims

1. A guide arm for guiding at least one element having an elongated shape (20), with each element having an elongated shape corresponding for instance to a cable assembly or a pipe, with said arm extending in a substantially longitudinal direction between two ends, comprising an inner cavity (62) opening on the outside of the arm at each of the ends thereof, and being adapted to accommodate at least one element having an elongated shape extending substantially longitudinally in the cavity, said arm consisting of two parts extending substantially longitudinally and opposite each other,
- one of the two parts is a frame (8) comprising a substantially longitudinal beam (18) linked to means (30, 36, 44) for holding the elements having an elongated shape on the outside and along the beam, and
- the other one of the two parts is a cover (54) comprising substantially longitudinal walls (56, 58) which cover the frame holding means, and are engaged with the beam, in such a way as to form the inner cavity in which the elements having and elongated shape extend,
**characterized in that** damping means (68) are arranged pre-stressed between the means (30, 36, 44) for holding the elements having an elongated shape (20), and the longitudinal walls (56, 58), in such a way as to reduce and damp the movements of the means for holding in the cavity (62).

2. A guide arm according to claim 1, **characterized in that** the damping means (68) comprise elastomer pads fixed to the longitudinal walls (56, 58) of the cover (54), and coated with a friction-resistant material (80) such as polytetrafluoroethylene in the vicinity of the contact with the frame (8) holding means (30, 36, 44).

3. A guide arm according to claim 1, **characterized in that** the damping means (68) comprise corrugated metal plates fixed to the longitudinal walls (56, 58) of the cover (54), and the corrugations crests (82) of which rest, on one side, against the longitudinal walls of the cover and, on the other side, against the frame (8) holding means (30, 36, 44).

4. A guide arm according to one of claims 1 to 3, **characterized in that** the damping means (68) are fixed to the longitudinal walls (56, 58) of the cover (54) using blind rivets (70).

5. A guide arm according to one of the preceding claims, **characterized in that** the frame (8) holding means (30, 36, 44) comprise at least one member for the passage (36) of elements having an elongated shape (20) comprising holes for the passage of elements having an elongated shape oriented substantially longitudinally, and which is held tight about the elements having an elongated shape by a collar (44) surrounding said member for the passage of elements having an elongated shape, with said collar being fixed to a lug (30) extending from the beam (18).

6. A guide arm according to claim 5, **characterized in that** several lugs (30) are substantially aligned along the beam (18) and are, each, fixed to a collar (44) tightening a member for the passage (36) of the elements having an elongated shape (20), in such a way as to guide the elements having an elongated shape along the guide arm.

7. An assembly consisting of a guide arm according to one of claims 5 or 6, and of at least one element having an elongated shape (20), **characterized in that** the guide arm has an aerodynamic configuration for the flowing of a fluid in the downstream direction of the guide arm, substantially perpendicularly to the longitudinal direction, with upstream the guide arm consisting of the frame (8) the lugs (30) of which extend longitudinally and in the downstream direction, from downstream of the beam (18), with the elements having an elongated shape being aligned in the downstream direction in the passage members (36) arranged downstream of the lugs, and downstream the guide arm consisting of the cover (54) the longitudinal walls (56, 58) of which extend in the downstream direction on either side of the members for the passage of the elements having an elongated shape, and are linked to the beam on either side of the lugs, in such a way that the guide arm has two smooth- and uniform-looking external surfaces, substantially mutually parallel, and joined in two upstream (28) and downstream (60) edges of the guide arm.

8. A turbomachine such as a turbojet or a turboprop, **characterized in that** it comprises a guide arm according to one of claims 1 to 6.

9. A turbomachine such as a turbojet or a turboprop, according to claim 8, **characterized in that** the guide arm is arranged through a fluid circulation annular stream (10) of the turbomachine, with one of the ends of the guide arm being linked to an inner annular shroud of the stream, and the other end of the guide arm being linked to an outer annular shroud of the stream, in such a way as to guide at least one element having an elongated shape (20), radially between the inside and the outside of the stream, with the frame (8) being arranged upstream of the cover (54).
